# EUROPEAN PATENT SPECIFICATION

(11) **EP 0 703 693 B1**
(45) Date of publication and mention of the grant of the patent: **02.03.2005**
(21) Application number: 95111419.8
(22) Date of filing: 20.07.1995
(51) Int. Cl.: H04M 3/00

(54) **Telephone side tone arrangement**
Vorrichtung für Telefoneigenecho
Arrangement d'effet local de téléphone

(30) Priority: 20.07.1994 AU PM693894
(43) Date of publication of application: 27.03.1996
(73) Proprietor: ALCATEL AUSTRALIA LIMITED, Sydney 252, N.S.W. 2015 (AU); ALCATEL, 75008 Paris (FR)
(72) Inventor: Crowe, Kevin Anthony, Bangor, 2234, New South Wales (AU)
(74) Representative: Rausch, Gabriele, Dr.

(56) References cited:
- PATENT ABSTRACTS OF JAPAN, unexamined applications, E field, vol. 9, no. 266, October 23, 1985 THE PATENT OFFICE JAPANESE GOVERNMENT page 87 E 352; & JP-A-60 112 348 (NIPPON DENSHIN DENWA KOSHA)
- PATENT ABSTRACTS OF JAPAN, unexamined applications, E field, vol. 7, no. 280, December 14, 1983 THE PATENT OFFICE JAPANESE GOVERNMENT page 20 E 216; & JP-A-58 157 286 (TOKYO SHIBAURA KENKI K.K.)
- PATENT ABSTRACTS OF JAPAN, unexamined applications, E field, vol. 14, no. 38, January 24, 1990 THE PATENT OFFICE JAPANESE GOVERNMENT page 30 E 878; & JP-A-01 270 435 (RICOH)

## Description

### Background of the Invention

This invention relates to a method and apparatus for optimizing the side tone in a telephone set connected to a telephone line. The telephone includes two or more side tone networks individually selectable by a switching circuit.

The side tone in a telephone set is the amount of signal fed back from the transmitter to the earpiece of a handset. The side tone needs to be optimized. Too much side tone may cause background noise to be picked up by the transmitter and fed to the earpiece at a sufficient level to distract the user of the telephone. Another problem with excess side tone is that the speaker may hear his own voice at a high level and thus reduce his speech level to compensate, with the result that his speech may not be properly audible at the other end of the line.

On the other hand, if there is too little side tone, the user may think the line is "dead".

Thus telephones incorporate a side tone network which feeds back a controlled amount of the speech signal from the transmitter to the receiver.

However, in use, the amount of signal fed back is affected by the line impedance. Thus if the side tone network is set for a line impedance of e.g., 600 Ω, variations in the line impedance will alter the side tone balance. It is known to provide telephones with a manual switch to select one of a pair of side tone networks to compensate for variations in line impedance. However, many subscribers are not sufficiently informed to be able to switch the switch to the correct position to optimize the side tone resulting in many cases of unsatisfactory operation. This is expensive for the phone company which must provide staff to deal with complaints of faulty lines, when the fault is in fact due to the wrong setting of the side tone switch, which may not be the responsibility of the phone company.

JP 58-157286 discloses a method of optimizing and an arrangement for optimizing side tone in a telephone connected to a telephone line, wherein the telephone includes two or more side tone networks individually selectable by a switching circuit. The known method comprises the steps of:
- providing a telephone set with two or more selectable side tone networks;
- detecting the state of the telephone line with a line state detection circuit in a main device;
- forwarding the detected state of the telephone line to a control circuit; and
- selecting the side tone circuit which produces the lowest side tone signal level based on the information obtained through the line state detection circuit.

JP 60-112348 discloses a method and an anti-side tone circuit for optimizing side tones by setting a variable impedance of the optimum balanced circuit network.

### Summary of the Invention

This specification discloses a method and arrangement for optimizing the side tone in a telephone subset connected to a telephone line. The method according to the invention comprises:
- providing a telephone set with two or more selectable side tone circuits;
- selecting one of the side tone circuits;
- applying test signals in the transmitter path of the telephone with each of the side tone circuits individually connected in the telephone network;
- measuring the side tone produced by each side tone circuit; and
- selecting the side tone circuit, which produces the side tone nearest to a predetermined optimum side tone level.

In one embodiment, the subset may be provided with a side tone test button which the user presses after dialling a test number at the exchange. The test button initiates a test routine under the control of the subsets processor. The subsets processor then selects each side tone network in turn and causes a signal generator e.g., a white noise generator or a tone generator in the subset to transmit the measuring signal. A monitoring circuit in the subset then measures the side tone level, either amplitude or power, resulting from each side tone network. The measured results are stored and compared with a predetermined optimum level and the processor selects the side tone network which most closely approximates the optimum level. The optimum level is usually the minimum level of side tone.

In a further embodiment, the signal generator is the DFMF generator of the subset, used to generate dialling signals.

Where the DTMF generator is used, the subsets processor can perform a side tone test automatically each time a number consisting of several digits is dialled. In this case, the processor switches between side tone networks after each digit is transmitted and the side tone level produced by each network while a digit is transmitted is measured and stored for comparison with the optimum.

The specification also discloses an arrangement for optimizing the side tone signal level in a telephone set comprising
- two or more selectable side tone circuits;
- means for selecting one of the side tone circuits ;
- a signal generator to apply a signal to the transmission path;
- control means to individually activate each side tone circuit while the signal is applied to the transmission path;
- side tone measuring means to measure the side tone level produced by each side tone circuit;
- storage means to store the result of the measurements of the side tone levels;
- comparison means to compare the results of the measurements to select the side tone circuit which provides the optimum side tone level;
- the selecting means selecting the side tone circuit, which produces the side tone nearest to a predetermined optimum side tone level; and
- the control means causing the selected side tone circuit to be applied as the telephone side tone circuit.

### Brief Description of the Drawings

- Figure 1: is a block diagram illustrating an embodiment of the invention;
- Figure 2: illustrates an embodiment of an A/D converter used as a measuring circuit;
- Figure 3: is a timing diagram of the operation of the circuit of Figure 2.

### Description of the Invention

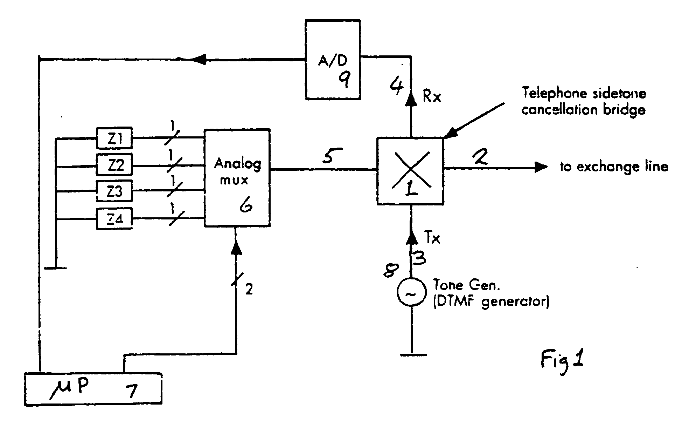

Figure 1 shows an invention, including elements of a phone circuit used in describing the side tone balance bridge 1 to which the exchange line 2, the phone's transmitter line 3, the phone's receiver line 4, and a side tone network line 5 are connected. There are a number of side tone networks Z1...Z4 each connected to the side tone network line via switching means 6 such as an analogue multiplexer. The multiplexer is controlled by the phone's microprocessor 7 to switch each of the networks Z1 to Z4 in turn to the balance bridge during a side tone test routine. A signal generator 8 is connected to the transmitter line 3 and, under control of the microprocessor 7, transmits test signals for use in measuring the side tone level of each of the networks Z1 to Z4. The generator 8 may be a special purpose generator producing a "white noise" signal over a substantial part of frequency range of the phone, or it may produce signals at one or more frequencies. In one embodiment, the generator 8 is the phone's DTMF generator used to transmit dialled digits to the exchange.

A measuring circuit 9 is connected to receiver line 4, and measures the side tone level produced by each of the networks Z1 to Z4 during a test. The measured results are stored in RAM associated with microprocessor 7 for comparison with a predetermined optimum value which may be stored in ROM. As an alternative, the test result may be compared between themselves, the network which produces the lowest level being selected.

The microprocessor 7 may be programmed to perform the test once only on installation, each time a call is made, or on dialling of a predetermined code.

The operation of the arrangement shown in Figure 1 will now be described in relation to an embodiment in which the signal generator is the phone's DTMF generator.

When the user commences pressing buttons to dial a number, the microprocessor's side tone test routine is initiated by a signal from the dialling circuit.

The microprocessor 7 switches a first of the networks, e.g. Z1, into the circuit by sending a command to the switching circuit 6. The dialling circuit instructs the DTMF generator to send a signal comprising a combination of tones representing the digit dialled to the line. The measuring circuit measures the level of the resulting side tone signal and this is stored in RAM.

The microprocessor then switches the second network Z2 into the circuit, having first switched Z1 out of the circuit, the second digit is transmitted, and the side tone level produced by the second network is measured and the result stored.

This process is repeated for each digit dialled until all networks have been tested.

The microprocessor then compares the test results, either among themselves or with a predetermined level, and selects the network which provides the optimum result.

As already mentioned, the test signals may be produced by a noise generator rather than by the DTMF generator.

The processor 7 may be programmed to perform the test only when a predetermined number is dialled and a connection made at the exchange. The processor 7 then causes the signal generator to transmit its test signals while the phone is connected to an established link. For this purpose the phone company may provide several test loads, to one of which the phone would be connected at the exchange when the predetermined number is dialled so that the test could be carried out under simulated call conditions.

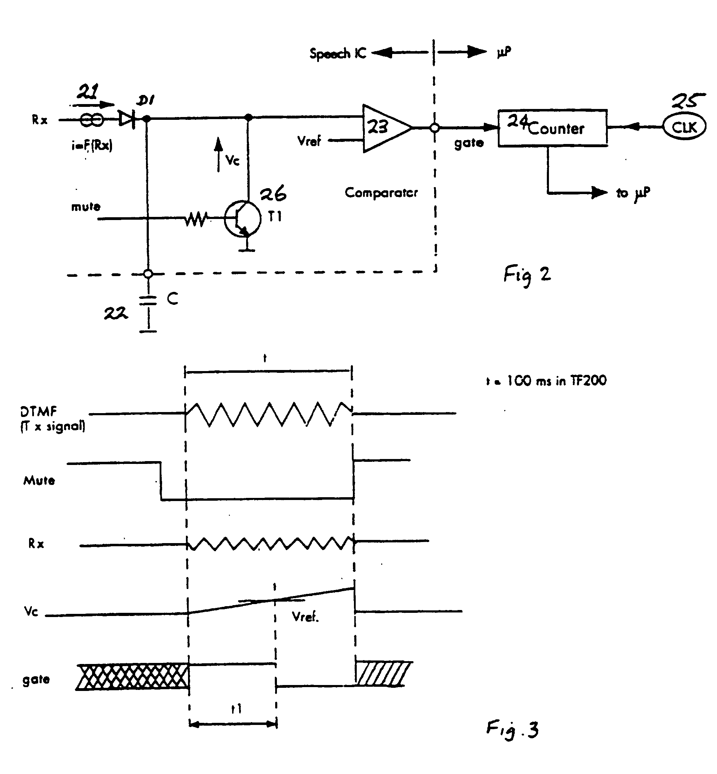

An embodiment of the measuring circuit, in the form of an Analogue/Digital converter is shown in Figure 2, and will be described with the aid of Figure 3.

The received signal, in this case the side tone RX, is applied to a current generator 21 which produces an output which is a function of RX. Preferably the current generator 21 produces a DC current via diode D1 to charge capacitor C. The current generator 21 may also include a weighing factor to compensate for the difference frequencies of the tone signals used in RX. When a DTMF digit is transmitted the mute signal from the dial circuit goes high and turns transistor 26 off. This allows capacitor 22 to charge at a rate proportional to the level of the input signal, as shown at Vc in Figure 3.

The voltage across capacitor 22 rises until it reaches Vref and this causes comparator 23 to switch states. Counter 24, driven by clock 25 starts counting at the same time as the capacitor 22 began to charge i.e., it was initiated by the start of the DTMF digit. The counter is stopped by the change of state of comparator 23 when Vc >/= Vref. As the slope of Vc is proportional to the input signal level, counter 24 thus contains an inverse measure of the level of the input signal. This information is stored in RAM for use by microprocessor 7.

The absolute accuracy of the A/D measurement is not important. The relative accuracy of the consecutive measurement is important to the operation of selecting a side tone network.

The use of the phone's DTMF generator has the advantage of not requiring an additional signal generator.

However, it does have some disadvantages. The DTMF generator uses signals at specific frequencies for each digit so the line impedance for different digits may differ, possibly giving rise to some inaccuracy in the test. The use of a noise generator would avoid this problem.

The values of the impedances Z1 to Z4 need to be carefully selected to avoid compromises with some line conditions .

Line conditions include exchange impedance, line type, gauge of wire, and length of line. Although there are a discrete set of exchange impedances and line types (600, 1200, 0.4mm, 0.64mm etc.). The length of line is continuously variable. The impedances Z1 to Z4 need to be selected to allow for the range of line conditions.

## Claims

1. A method of optimizing side tone in a telephone connected to a telephone line, wherein the telephone includes two or more side tone circuits (Z1, Z2, Z3, Z4) individually selectable by a switching circuit (6), the method including:
- providing a telephone set with two or more selectable side tone circuits (Z1, Z2, Z3, Z4); and
- selecting one of the side tone circuits (Z1, Z2, Z3, Z4),
**characterized by** the steps of
- applying test signals in the transmitter path (Tx) of the telephone with each of the side tone circuits (Z1, Z4 Z3, Z4) individually connected in the telephone network;
- measuring the side tone produced by each side tone circuit (Z1, Z2, Z3, Z4); and
- selecting the side tone circuit (Z1, Z2, Z3, Z4), which produces the side tone nearest to a predetermined optimum side tone level.

2. A method as claimed in claim 1 wherein the telephone includes a microprocessor (7) and wherein the microprocessor (7) automatically controls the carrying out of the method.

3. A method as claimed in claim 1 or claim 2 wherein the telephone includes a DTMF generator (8) to produce tone signals when dialling digits, and wherein the tone signals are used as the test signals.

4. A method as claimed in claim 1 or claim 2 wherein the telephone includes a noise generator (8) whose output is used as the test signals.

5. A method as claimed in claim 4 wherein, in response to a predetermined dialled number the telephone is connected to a test load at the telephone exchange before the method is carried out.

6. An arrangement for optimizing the side tone signal level in a telephone set having
- two or more selectable side tone circuits (Z1, Z2, Z3, Z4); and
- means for selecting one of the side tone circuits (Z1, Z2, Z3, Z4),
**characterized by**
- a signal generator (8) to apply a signal to the transmission path;
- control means to individually activate each side tone circuit (Z1, Z2, Z3, Z4) while the signal is applied to the transmission path;
- side tone measuring means to measure the side tone level produced by each side tone circuit (Z1, Z2, Z3, Z4) ;
- storage means to store the result of the measurements of the side tone levels;
- comparison means to compare the results of the measurements to select the side tone circuit (Z1, Z2, Z3, Z4) which provides the optimum side tone level;
- the selecting means selecting the side tone circuit (Z1, Z2, Z3, Z4), which produces the side tone nearest to a predetermined optimum side tone level; and
- the control means causing the selected side tone circuit (Z1, Z2, Z3, Z4) to be applied as the telephone side tone circuit.

7. An arrangement as claimed in claim 6 wherein the control means is a microprocessor (7).

8. An arrangement as claimed in claim 6 or claim 7 wherein the signal generator (8) comprises the telephone set's DTMF generator and wherein the measuring of the side tone levels is carried out while the DTMF generator is generating DTMF dialling signals.

9. An arrangement as claimed in claim 6 or claim 7 wherein the signal generator (8) is a noise generator.

10. An arrangement as claimed in claim 9 as appended to claim 7, wherein the microprocessor (7) is responsive to a predetermined dialled number to carry out the selection of a side tone circuit (Z1, Z2, 23, Z4) when a call has been established in response to the dialling of the predetermined number.

## Patentansprüche

1. Ein Verfahren zur Optimierung des Eigenechos in einem Telefon, das an eine Telefonleitung angeschlossen ist, worin das Telefon zwei oder mehr Eigenecho-Schaltkreise (Z1, Z2, Z3, Z4) enthält, die durch einen Umschalt-Schaltkreis (6) individuell ausgewählt werden können, wobei das Verfahren folgendes umfasst:
- Bereitstellung eines Telefons mit zwei oder mehr auswählbaren Eigenecho-Schaltkreisen (Z1, Z2, Z3, Z4); und
- Auswahl eines der Eigenecho-Schaltkreise (Z1, Z2, Z3, Z4),
**gekennzeichnet, durch** folgende Schritte:
- Anlegen von Testsignalen im Sendepfad (Tx) des Telefons, wobei jeder der Eigenecho-Schaltkreise (Z1, Z2, Z3, Z4) einzeln an das Telefonnetz angeschlossen wird;
- Messung des von jedem Eigenecho-Schaltkreis (Z1, Z2, Z3, Z4) erzeugten Eigenechos; und
- Auswahl des Eigenecho-Schaltkreises (Z1, Z2, Z3, Z4), der das Eigenecho erzeugt, das am nächsten an einem vorher festgelegten optimalen Eigenecho-Pegel liegt.

2. Ein Verfahren wie in Anspruch 1 beansprucht, worin das Telefon einen Mikroprozessor (7) enthält und worin der Mikroprozessor (7) die Ausführung des Verfahrens automatisch steuert.

3. Ein Verfahren wie in Anspruch 1 oder Anspruch 2 beansprucht, worin das Telefon einen DTMF-Generator (8) enthält, um Tonsignale zu erzeugen, wenn Ziffern gewählt werden, und worin die Tonsignale als Testsignale verwendet werden.

4. Ein Verfahren wie in Anspruch 1 oder Anspruch 2 beansprucht, worin das Telefon einen Rauschgenerator (8) enthält, dessen Ausgangssignale als Testsignale verwendet werden.

5. Ein Verfahren wie in Anspruch 4 beansprucht, worin als Reaktion auf eine vorher festgelegte gewählte Nummer das Telefon mit einer Test-Last in der Fernsprechvermittlung verbunden wird, bevor das Verfahren ausgeführt wird.

6. Eine Anordnung zur Optimierung des Eigenecho-Signalpegels in einem Telefon, die folgendes aufweist:
- Zwei oder mehr auswählbare Eigenecho-Schaltkreise (Z1, Z2, Z3, Z4); und
- Mittel zur Auswahl eines der Eigenecho-Schaltkreise (Z1, Z2, Z3, Z4),
**gekennzeichnet durch**
- einen Signalgenerator (8) zum Anlegen eines Signals an den Sendepfad;
- Steuer-Mittel zur individuellen Aktivierung jedes Eigenecho-Schaltkreises (Z1, Z2, Z3, Z4), während das Signal an den Sendepfad angelegt ist;
- Mittel zur Messung des Eigenechos, um den Pegel des Eigenechos zu messen, der von jedem Eigenecho-Schaltkreis (Z1, Z2, Z3, Z4) erzeugt wird;
- Speichermittel zur Speicherung des Ergebnisses der Messungen der Eigenecho-Pegel;
- Vergleichsmittel zum Vergleich der Ergebnisse der Messungen zur Auswahl des Eigenecho-Schaltkreises (Z1, Z2, Z3, Z4), der den optimalen Eigenecho-Pegel bereitstellt;
- Auswahl-Mittel zur Auswahl des Eigenecho-Schaltkreises (Z1, Z2, Z3, Z4), der das Eigenecho erzeugt, welches am nächsten an einem optimalen Eigenecho-Pegel liegt; und
- Steuer-Mittel, welches bewirkt, dass der ausgewählte Eigenecho-Schaltkreis (Z1, Z2, Z3, Z4) als Eigenecho-Schaltkreis des Telefons angewendet wird.

7. Eine Anordnung wie in Anspruch 6 beansprucht, worin das Steuer-Mittel ein Mikroprozessor (7) ist.

8. Eine Anordnung wie in Anspruch 6 oder Anspruch 7 beansprucht, worin der Signalgenerator (8) den DTMF-Generator des Telefons umfasst und worin die Messung der Eigenecho-Pegel ausgeführt wird, während der DTMF-Generator DTMF-Wählsignale erzeugt.

9. Eine Anordnung wie in Anspruch 6 oder Anspruch 7 beansprucht, worin der Signalgenerator (8) ein Rauschgenerator ist.

10. Eine Anordnung wie in Anspruch 9 beansprucht, wie an Anspruch 7 angehängt, worin der Mikroprozessor (7) auf eine vorher festgelegte gewählte Nummer reagiert und eine Auswahl eines Eigenecho-Schaltkreises (Z1, Z2, Z3, Z4) ausführt, wenn als Reaktion auf das Wählen der vorher festgelegten Nummer eine Verbindung aufgebaut wurde.

## Revendications

1. Procédé pour optimiser l'effet local dans un téléphone raccordé à une ligne téléphonique, dans lequel le téléphone comprend deux circuits d'effet local ou davantage (Z1, Z2, Z3, Z4) pouvant être sélectionnés individuellement par un circuit de commutation (6), le procédé comprenant les étapes consistant à :
- munir un combiné de téléphone de deux circuits d'effet local pouvant être sélectionnés ou davantage (Z1, Z2, Z3, Z4) ; et
- sélectionner l'un des circuits d'effet local (Z1, Z2, Z3, Z4) ;
**caractérisé par** les étapes consistant à :
- appliquer des signaux de test dans la voie d'émetteur (Tx) du téléphone, chacun des circuits d'effet local (Z1, Z2, Z3, Z4) étant raccordé individuellement dans le réseau téléphonique ;
- mesurer l'effet local produit par chaque circuit d'effet local (Z1, Z2, Z3, Z4) ; et
- sélectionner le circuit d'effet local (Z1, Z2, Z3, Z4) qui produit l'effet local le plus proche d'un niveau d'effet local optimal prédéterminé.

2. Procédé selon la revendication 1, dans lequel le téléphone comprend un microprocesseur (7) et dans lequel le microprocesseur (7) contrôle automatiquement l'exécution du procédé.

3. Procédé selon l'une quelconque des revendications 1 ou 2, dans lequel le téléphone comprend un générateur de tonalités multifréquences (8) pour produire des signaux de tonalité lors de la composition de chiffres et dans lequel les signaux de tonalité sont utilisés comme les signaux de test.

4. Procédé selon l'une quelconque des revendications 1 ou 2, dans lequel le téléphone comprend un générateur de bruit (8) dont la sortie est utilisée comme les signaux de test.

5. Procédé selon la revendication 4, dans lequel, en réaction à un numéro composé prédéterminé, le téléphone est raccordé à une charge de test à l'échange téléphonique avant que le procédé ne soit exécuté.

6. Dispositif pour optimiser le niveau du signal d'effet local dans un combiné téléphonique comprenant :
- deux circuits d'effet local pouvant être sélectionnés ou davantage (Z1, Z2, Z3, Z4) ; et
- des moyens pour sélectionner l'un des circuits d'effet local (Z1, Z2, Z3, Z4) ;
**caractérisé par** :
- un générateur de signal (8) pour appliquer un signal à la voie de transmission ;
- un moyen de commande pour activer individuellement chaque circuit d'effet local (Z1, Z2, Z3, Z4) lorsque le signal est appliqué à la voie de transmission ;
- des moyens de mesure d'effet local pour mesurer le niveau d'effet local produit par chaque circuit d'effet local (Z1, Z2, Z3, Z4) ;
- des moyens d'enregistrement pour enregistrer le résultat des mesures des niveaux d'effet local ;
- des moyens de comparaison pour comparer les résultats des mesures afin de sélectionner le circuit d'effet local (Z1, Z2, Z3, Z4) qui fournit le niveau d'effet local optimal ;
- les moyens de sélection qui sélectionnent le circuit d'effet local (Z1, Z2, Z3, Z4) qui produit l'effet local le plus proche d'un niveau d'effet local optimal prédéterminé ; et
- le moyen de commande qui fait en sorte que le circuit d'effet local sélectionné (Z1, Z2, Z3, Z4) est appliqué comme le circuit d'effet local du téléphone.

7. Dispositif selon la revendication 6, dans lequel le moyen de commande est un microprocesseur (7).

8. Dispositif selon l'une quelconque des revendications 6 ou 7, dans lequel le générateur de signal (8) comprend le générateur de tonalités multifréquences du combiné téléphonique et dans lequel la mesure des niveaux d'effet local est réalisée pendant que le générateur de tonalités multifréquences produit des signaux de composition à tonalités multifréquences.

9. Dispositif selon l'une quelconque des revendications 6 ou 7, dans lequel le générateur de signal (8) est un générateur de bruit.

10. Dispositif selon la revendication 9 telle qu'annexée à la revendication 7, dans lequel le microprocesseur (7) réagit à un numéro composé prédéterminé pour exécuter la sélection d'un circuit d'effet local (Z1, Z2, Z3, Z4) lorsqu'un appel a été établi à la suite de la composition du numéro prédéterminé.
